# EUROPÄISCHE PATENTANMELDUNG

(11) **EP 0 763 666 A2**
(43) Veröffentlichungstag der Anmeldung: **19.03.1997**
(21) Anmeldenummer: 96112091.2
(22) Anmeldetag: 26.07.1996
(51) Int. Cl.: F16C 1/22

(54) **Nachstelleinrichtung für biegsame Betätigungszüge**

(30) Priorität: 14.09.1995 DE 29514731 U
(71) Anmelder: VOFA-WERK XAVIER VORBRÜGGEN GmbH & Co. KG, D-40549 Düsseldorf (DE)
(72) Erfinder:
(74) Vertreter: Paul, Dieter-Alfred, Dipl.-Ing.

(57) **Zusammenfassung**

Eine Nachstelleinrichtung für biegsame Betätigungszüge, welche eine Betätigungsseele und einen diese bis auf Endbereiche umgebenden Betätigungsmantel aufweisen, wobei die Nachstelleinrichtung eine durch eine Spreizfeder beaufschlagte Spreizeinrichtung aufweist, ist durch folgende Merkmale gekennzeichnet:
a) die Spreizeinrichtung weist ein äußeres Teleskopteil (2, 52) und ein darin axial beweglich geführtes inneres Teleskopteil (3, 53) auf;
b) durch beide Teleskopteile (2, 3; 52, 53) geht ein sich in Teleskopierrichtung erstreckender Durchgangskanal für die Betätigungsseele (103);
c) die Spreizfeder (14, 62) ist zwischen den beiden Teleskopteilen (2, 3; 52, 53) angeordnet und beaufschlagt sie in austelekopierender Richtung;
d) wenigstens eines der Teleskopteile (2, 3; 52, 53) hat eine Abstützfläche (7, 13; 57, 64) für eine Stirnseite des Betätigungsmantels (102, 108, 109);
e) zwischen den Teleskopteilen (2, 3; 52, 53) befindet sich eine sich in Teleskopierrichtung erstreckende Ratschenscheneinrichtung (42, 45; 69, 70, 71, 72), die in eintelekospierender Richtung sperrt.

## Beschreibung

Die Erfindung betrifft eine Nachstelleinrichtung für biegsame Betätigungszüge, welche eine Betätigungsseele und eine diese bis auf Endbereiche umgebenden Betätigungsmantel aufweisen, wobei die Nachstelleinrichtung eine durch eine Spreizfeder beaufschlagte Spreizeinrichtung aufweist.

Insbesondere bei Kraftfahrzeugen werden noch eine Reihe von Betätigungsfunktionen mit Hilfe von Betätigungszügen durchgeführt, da sie einfach und robust sind, geringes Gewicht haben und im Regelfall problemlos verlegt werden können. Dabei besteht ein Betätigungszug im Grundsatz aus zwei Teilen, nämlich einem schlauchförmigen Betätigungsmantel und einer darin geführten Betätigungsseele, die meist als litzenartiger Drahtzug ausgebildet ist. An den beiden Enden des Betätigungsmantels steht die Betätigungsseele vor und hat dort Anschlußstücke, mit denen das eine Ende an dem Betätigungsorgan und das andere Ende an einem zu betätigenden Organ befestigt wird. Solche Organe können beispielsweise das Gaspedal auf der einen und ein Vergaser auf der anderen Seite sein.

Soweit solche Betätigungszüge zur Bedienung von Einrichtungen verwendet werden, die einem Verschleiß unterliegen, wie beispielsweise eine Kupplung oder eine Feststellbremse, besteht das Problem, daß mit zunehmendem Verschleiß ein immer größer werdender Totgang in der ersten Phase der Betätigung entsteht. Im Extremfall kann dies zur Folge haben, daß der nach Überwindung des Totgangs noch zur Verfügung stehende Weg, der zu einer Betätigung führt, nicht mehr ausreicht, um das zu betätigende Organ ordnungsgemäß zu bedienen, beispielsweise bei einer Feststellbremse genügend Anpreßdruck für die Bremsbacken zu erzeugen.

Zur Vermeidung eines Totgangs sind im Stand der Technik Nachstelleinrichtungen bekannt, welche eine Spreizeinrichtung aufweisen, mit der die wirksame Länge des Betätigungsmantels vergrößert werden kann. Eine solche Spreizeinrichtung ist mit einer in Spreizrichtung wirkenden Spreizfeder versehen, die auf den Betätigungsmantel wirkt und für eine Verlängerung von dessen wirksamer Länge sorgt, wenn die Betätigungsseele nicht unter Zug steht, also das Betätigungsorgan, beispielsweise der Handbremshebel, in seiner untersten Stellung befindlich ist.

Die bekannten Nachstelleinrichtungen sind relativ kompliziert aufgebaut und deshalb teuer. Außerdem eignen sie sich wegen ihres Raumbedarfs nur für die Montage an einem Ende des Betätigungsmantels.

Der Erfindung liegt die Aufgabe zugrunde, eine Nachstelleinrichtung der eingangs genannten Art so auszubilden, daß sie konstruktiv einfach und deshalb kostengünstig ist, daß sie geringen Raumbedarf hat und daß sie an beliebiger Stelle des Betätigungszugs eingebaut werden kann.

Diese Aufgabe wird erfindungsgemäß durch eine Nachstelleinrichtung gelöst, die durch folgende Merkmale gekennzeichnet ist:
a) Die Spreizeinrichtung weist ein äußeres Teleskopteil und ein darin axial beweglich geführtes inneres Teleskopteil auf;
b) durch beide Teleskopteile geht ein sich in Teleskopierrichtung erstreckender Durchgangskanal für die Betätigungsseele;
c) die Spreizfeder ist zwischen den beiden Teleskopteilen angeordnet und beaufschlagt sie in austelekopierender Richtung;
d) wenigstens eines der Teleskopteile hat eine Abstützfläche für eine Stirnseite des Betätigungsmantels;
e) zwischen den Teleskopteilen befindet sich eine sich in Teleskopierrichtung erstreckende Ratscheneinrichtung, die in eintelekopierender Richtung sperrt.

Gemäß der Erfindung weist die Nachstelleinrichtung zwei Teleskopierteile auf, mit denen sich die Erstreckung der Nachstelleinrichtung in Richtung des Durchgangskanals für die Betätigungsseele verändern läßt. Dabei sorgt eine Ratscheneinrichtung dafür, daß dies nur in einer Richtung, d. h. in Richtung einer Verlängerung der Nachstelleinrichtung geschieht, und zwar aufgrund der Spreizfeder, die die beiden Teleskopteile auseinanderfährt, wenn in dem Betätigungszug eine Lose entsteht. Auf diese Weise wird die wirksame Länge des Betätigungsmantels vergrößert. Dabei zeichnet sich diese Nachstelleinrichtung durch einfache und kostengünstige Bauweise aus, die zudem sehr kompakt gestaltet werden kann, so daß der Einsatz auch bei beengten Platzverhältnissen problemlos möglich ist.

In Ausbildung der Erfindung ist vorgesehen, daß an beiden Telekopteilen Abstützflächen für die Stirnseiten von jeweils zwei Teilabschnitten des Betätigungsmantels vorgesehen ist. Diese Ausführungsform eignet sich für den Einbau an beliebiger Stelle des Betätigungsmantels. Die Nachstelleinrichtung kann deshalb an Orten vorgesehen werden, wo hinreichend Platz ist und wo sie für eventuelle Wartungsmaßnahmen gut zugänglich ist. Dabei ist eine Gestaltung zweckmäßig, bei der die eine Abstützfläche in dem ersten Ende des äußeren Teleskopteils und die andere Abstützfläche an dem dem ersten Ende entfernt liegenden zweiten Ende des inneren Teleskopteils angeordnet sind.

In weiterer Ausgestaltung der Erfindung ist vorgesehen, daß das innere Teleskopteil rohrförmig ausgebildet ist und einen ersten Anschlag aufweist und daß das äußere Teleskopteil einen zweiten Anschlag aufweist, wobei die Spreizfeder sich als Druckfeder an beiden Anschlägen abstützt. Dabei sollte der erste Anschlag im Bereich des außenliegenden Endes des inneren Teleskopteils und der zweite Anschlag im Bereich des dazu entfernt liegenden Endes des äußeren Teleskopteils angeordnet sein, um eine hinreichende Länge für die Spreizfeder zur Verfügung zu stellen. Zur Führung der Spreizfeder sollte von dem zweiten Anschlag und/oder von dem ersten Anschlag ein die Spreizfeder durchsetzender Führungszylinder ausgehen. Dies vermeidet ein Knicken der Feder. Bei dieser Ausführungsform ist es zweckmäßig, daß der Durchgangskanal die Anschläge und ggf. den Führungszylinder durchsetzt und die Spreizfeder koaxial zum Durchgangskanal angeordnet ist. Dies gibt durch die Verschachtelung der einzelnen Teile eine besonders kompakte Konstruktion.

Nach der Erfindung ist ferner vorgesehen, daß die Ratscheneinrichtung eine dem Spreizweg entsprechende Verzahnung auf der Außenseite des inneren Teleskopteils und eine in dem äußeren Teleskopteil gelagerten Klinkensperre aufweist. Dabei sollte die Klinkensperre derart von außen zugänglich sein, daß sie aus der und in die Eingriffsstellung mit der Verzahnung bewegbar ist. Dies ist wichtig für Wartungszwecke, da es dann notwendig werden kann, daß das innere Teleskopteil wieder in den Innenraum des äußeren Teleskopteils eingeschoben wird. Zweckmäßig ist es, daß die Klinkensperre durch eine Feder in Eingriffsstellung der Verzahnung beaufschlagt ist, damit bei Betätigung des Betätigungszugs gesichert ist, daß die Sperrwirkung der Sperrklinke erhalten bleibt, auch wenn die Nachstelleinrichtung Erschütterungen ausgesetzt ist.

Nach einem weiteren Merkmal der Erfindung ist vorgesehen, daß die Klinkensperre einen Eingriffsabschnitt und an diesen anschließend einen Bogenabschnitt aufweist, der in einer entsprechenden Lagernut eingepaßt ist. Hierdurch ergibt sich eine besonders einfache Ausbildung. Dabei sollte sich an den ersten Bogenabschnitt ein zweiter Bogenabschnitt anschließen, der in entgegengesetzter Richtung gebogen ist und in einen Betätigungshebel ausläuft. Dies macht die Bedienung der Sperrklinke auch bei Vorspannung einfach. Die Feder für die Beaufschlagung in Eingriffsrichtung kann beispielsweise als V-förmige Blattfeder ausgebildet sein.

Die Erfindung sieht ferner vor, daß die Verzahnung in Verzahnungshälften längsgeteilt ist, wobei auch ein Abstand vorgesehen sein kann. Dabei kann jeder Verzahnungshälfte eine eigene Klinkensperre zugeordnet sein. Alternativ dazu besteht die Möglichkeit, den Verzahnungshälften einen ihren Abstand überbrückende Klinkensperre zuzuordnen.

Die Verzahnungshälften können an den Oberseiten eines das innere Teleskopteil umgebenden U-Teils eingeformt sein. Stattdessen kommt jedoch auch die Einformung der Verzahnung in das innere Teleskopteil in Frage, wenn es aus einem dafür hinreichend harten Material hergestellt wird.

In weiterer Ausgestaltung der Erfindung ist vorgesehen, daß zwischen den Teleskopteilen eine Blockiereinrichtung für die lösbare Blockierung des inneren Teleskopteil in eintelekopierter Stellung aufweist. Diese Blockiereinrichtung erleichtert die Montage der Nachstelleinrichtung. Nach Vornahme der Montage kann sie gelöst werden, so daß sich die Nachstelleinrichtung entsprechend der im Betätigungszug vorhandenen Lose durch Auseinanderfahren der Teleskopteile einstellen kann. Die Blockiereinrichtung sollte aus in einteleskopierender Stellung in Eingriff stehenden Blockierelementen gebildet sein, wobei zweckmäßigerweise das eine Blockierelement als ein Blockieranschlag und das andere Blockierelement als aus der Eingriffsstellung herausbewegbare Blockierklinke ausgebildet ist, welche in dem äußeren Teleskopteil beweglich geführt und von außen zugänglich ist. Auch hier sollte die Blockierklinke in Richtung der Blockierstellung federbelastet sein.

Es ist ferner vorteilhaft, wenn mittels der Blockiereinrichtung auch eine Blockierung des inneren Teleskopteils in austeleskopierter Stellung bewirkbar ist und daß hierzu der Blockieranschlag als vorstehender Steg ausgebildet und daß in Teleskopierrichtung einwärts ein weiterer Blockieranschlag vorhanden ist. Auf diese Weise wird bei einem unbeabsichtigten Lösen der Blockieeinrichtung vermieden, daß das innere Teleskopteil aufgrund der Spreizfederwirkung aus dem äußeren Teleskopteil herausschießt. Soweit die Verzahnung der Ratscheneinrichtung in Verzahnungshälften aufgeteilt ist, die beabstandet sind, ist es für eine kompakte Konstruktion sinnvoll, daß die Blockiereinrichtung zwischen den Verzahnungshälften angeordnet ist.

In der Zeichnung ist die Erfindung anhand von Ausführungsbeispielen näher veranschaulicht. Es zeigen:
- Figur 1: einen Längsschnitt durch eine erste erfindungsgemäße Nachstelleinrichtung;
- Figur 2: einen Querschnitt durch die Nachstelleinrichtung gemäß Figur 1 in der Ebene A-A;
- Figur 3: die Nachstelleinrichtung gemäß den Figuren 1 und 2 in der Draufsicht;
- Figur 4: einen Längsschnitt durch eine zweite erfindungsgemäße Nachstelleinrichtung mit Schnittversatz im vorderen Bereich;
- Figur 5: einen Querschnitt durch die Nachstelleinrichtung gemäß Figur 4 in der Ebene B-B gemäß Figur 6;
- Figur 6: einen Längsschnitt durch die Nachstelleinrichtung gemäß den Figuren 4 und 5 in der Mittelebene;
- Figur 7: einen Betätigungszug mit einer Nachstelleinrichtung gemäß den Figuren 4 bis 6 in teilweisem Längsschnitt und
- Figur 8: einen Betätigungszug mit einer gegenüber der Nachstelleinrichtung gemäß den Figuren 4 bis 6 leicht abgewandelten Nachstelleinrichtung.

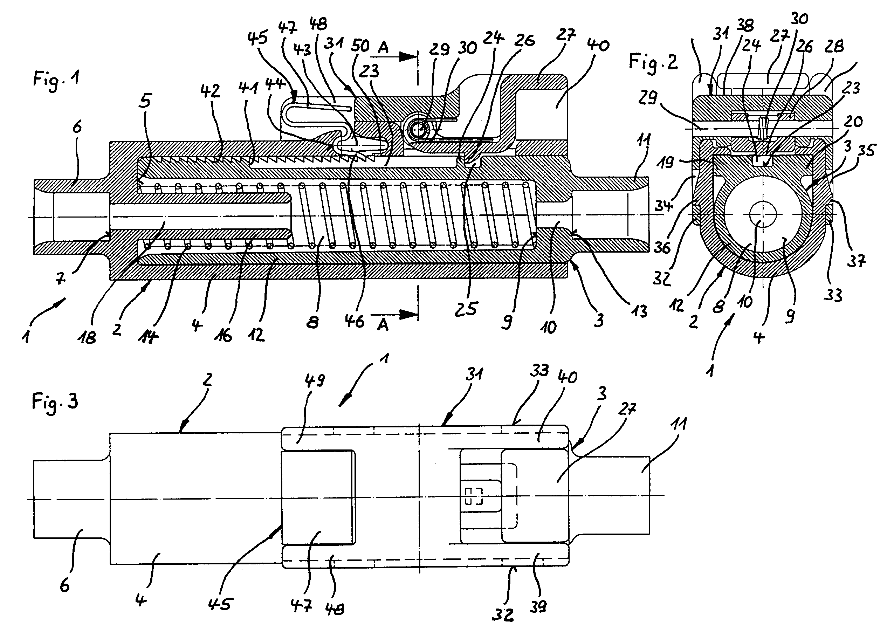

Die in den Figuren 1 bis 3 dargestellte Nachstelleinrichtung 1 weist als Hauptelemente ein äußeres Teleskopteil 2 und ein inneres Teleskopteil 3 auf. Das äußere Teleskopteil 2 hat einen Mantel 4, der im linksseitigen Abschnitt geschlossen-zylindrisch und im rechtsseitigen Abschnitt - wie insbesondere Figur 2 erkennen läßt - U-förmig ausgebildet ist. Linksseitig endet das äußere Teleskopteil 2 in einer Ringanschlagwandung 5. Außenseitig ist am Mantel 4 ein Hülsenabschnitt 6 angeformt, der innenseitig eine ringförmige Abstützfläche 7 bildet. Am gegenüberliegenden Ende ist das äußere Teleskopteil 2 offen ausgebildet.

Das innere Teleskopteil 3 hat einen zylindrischen Innenraum 8, der zur Ringanschlagwand 5 hin offen ist. Am gegenüberliegenden, rechtsseitigen Ende ist eine weitere Ringanschlagwand 9 ausgebildet. Sie umgibt eine Durchgangsöffnung 10̸, die sich in einem Hülsenabschnitt 11 fortsetzt, der am dortigen Ende eines Mantels 12 angeformt ist, und zwar unter Ausbildung einer Abstützfläche 13. Der Mantel 12 des inneren Teleskopteils 3 liegt linksseitig an der Abstützfläche 7 an und steht in dieser Stellung - abgesehen von dem Hülsenabschnitt 11 - nicht über das äußere Teleskopteil 2 hinaus. Sein Mantel 12 ist an die Innenoberfläche des Mantels 4 des äußeren Teleskopteils 2 so angepaßt, daß das innere Teleskopteil 3 in dem äußeren Teleskopteil 2 axial beweglich geführt ist.

In dem Innenraum 8 des Teleskopteils 3 erstreckt sich eine als Druckfeder wirkende Schraubenfeder 14, welche sich an den beiden Ringanschlagenden 5, 9 abstützt und deshalb bestrebt ist, das innere Teleskopteil 3 aus dem äußeren Teleskopteil 2 herauszudrücken. Zur Führung der Schraubenfeder 14 geht von der Abstützfläche 7 des äußeres Teleskopteils 2 ein zylindrischer Hülsenvorsprung 16 in Richtung auf die Durchgangsöffnung 10̸ aus. Der Hülsenvorsprung 16 wird von einem Durchgangskanalabschnitt 18 durchsetzt.

Wie insbesondere Figur 2 zeigt, hat der Mantel 12 des inneren Teleskopteils 3 einen grundsätzlich zylindrischen Querschnitt. Im oberen Bereich bildet er seitliche Vorsprünge 19, 20̸ aus, die an der Innenseite des Mantels 4 des äußeren Teleskopteils 2 anliegen und auf diese Weise ein Verdrehen des Mantels 12 verhindern. Auf der Oberseite ist mittig eine nach oben offene, im Querschnitt rechteckige Nut 23 eingeformt. Sie endet zur offenen Seite des äußeren Teleskopteils 2 hin in einem Blockiersteg 24, der die Nut 23 von einer Blockierausnehmung 25 trennt. In diese faßt in der gezeigten Stellung eine nasenförmige Blockierklinke 26 ein, welche an einem Blockierhebel 27 untenseitig angeformt ist. Der Blockierhebel 27 hat Z-Form und ist über eine Gabel 28 an einer Schwenkachse 29 gelagert. Über eine Schraubenfeder 30̸ wird der Blockierhebel 27 in Eingriffsrichtung, d. h. nach unten beaufschlagt.

Die Schwenkachse 29 ist in einem Dachaufsatz 31 gehalten, der den U-förmigen Abschnitt des Mantels 4 nach oben hin abschließt. Der Dachaufsatz 31 hat nach unten gehende Befestigungsschenkel 32, 33, die Öffnungen 34, 35 aufweisen und die beiden Seiten des Mantels 4 des äußeren Teleskopteils 2 einfassen. Die unterhalb der Öffnungen 34, 35 liegenden Teile der Befestigungsschenkel 32, 33 unterfassen hakenförmige Vorsprünge 36, 37, die ein selbsttätiges Lösen des Dachaufsatzes 31 verhindern. Die Formgebung der Vorsprünge 36, 37 ist so beschaffen, daß beim Aufsetzen des Dachaufsatzes 31 die Befestigungsschenkel 32, 33 zunächst nach außen gebogen werden, bis die unteren Teile der Befestigungsschenkel 32, 33 über die Vorsprünge 36, 37 gerutscht sind und die Vorsprünge 36, 37 in die Öffnungen 34, 35 einfassen.

Der Dachaufsatz 31 hat einen Ausschnitt 38, der von zwei Seitenwandungen 39, 40̸ begrenzt wird, wobei die Höhe der Seitenwandungen 39, 40̸ so bemessen ist, daß sie den Blockierhebel 27 in der gezeigten Stellung einfassen und vor unbeabsichtigter Betätigung schützen.

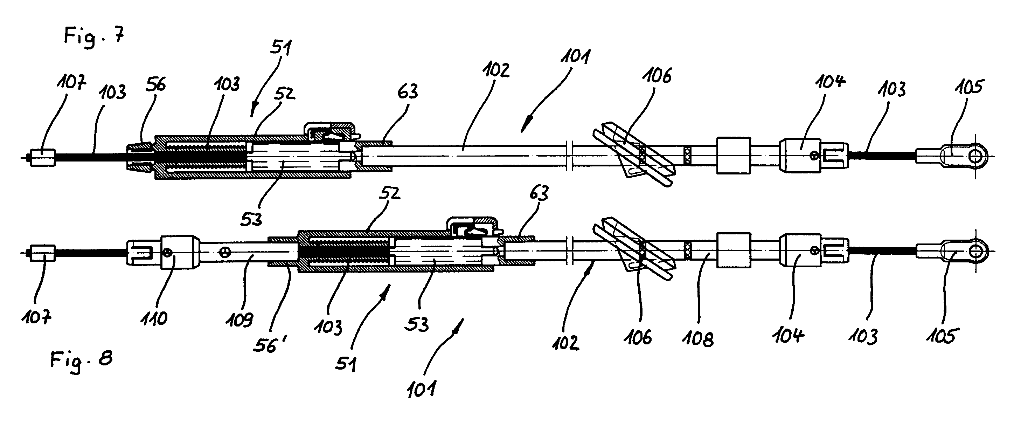

Der Blockierhebel 27 bzw. dessen Blockierklinke 26 halten das innere Teleskopteil 3 über den Blockiersteg 24 in der gezeigten Stellung, so daß er nicht aus dem äußeren Teleskopteil 2 aufgrund der Wirkung der Schraubenfeder 14 herausschießen kann. In dieser Form wird die Nachstelleinrichtung 1 transportiert und auch an oder in einem Betätigungszug derart montiert, daß dessen Betätigungsseele durch den freien Innenraum der Nachstelleinrichtung, also insbesondere durch den Durchgangskanalabschnitt 18, den Innenraum 8, die Durchgangsöffnung 10̸ und die Hülsenabschnitte 6, 11, wobei der Betätigungsmantel stirnseitig an der Abstützfläche 13 anliegt und auch - wenn er zweigeteilt ist (Figur 8) - an der Abstützfläche 7. Soll das innere Teleskopteil 3 aus dem äußeren Teleskopteil 2 herausfahren, wird der Blockierhebel 27 angehoben, so daß die Blockierklinke 26 den Blockiersteg 24 freigibt. Anschließend wird der Blockierhebel 27 wieder losgelassen, so daß er dann mit der Blockierklinke 26 in die Nut 23 einfaßt. Die Nut 23 endet in einem Nutanschlag 41, der als Begrenzung für die Austeleskopierbewegung des inneren Teleskopteils 3 dient und an dem die Blockierklinke 26 in der äußersten Stellung anfährt. Auf diese Weise ist gesichert, daß das innere Teleskopteil 3 bei kurzem Anheben des Blockierhebels 27 nicht vollständig aus dem äußeren Teleskopteil 2 herausfährt. Durch erneutes Anheben des Blockierhebels 27 ist dies jedoch bei Bedarf möglich, beispielsweise zum Zwecke der Zerlegung der Nachstelleinrichtung 1.

Auf der Oberseite des Mantels 12 des inneren Teleskopteils 3 befinden sich beidseits der Nut 23 Verzahnungshälften eingeformt, von denen hier nur eine Verzahnungshälfte 42 zu sehen ist. Die Verzahnungshälften 42 haben ein Sägezahnprofil, deren Zähne entgegen der Ausfahrrichtung des inneren Teleskopteils 3 gerichtet sind.

Der Mantel 4 des äußeren Teleskopteils 2 weist gegenüber den Verzahnungshälften 42 einen Lagerraum 43 auf, der unten- und obenseitig offen ist. Auf der einen Seite hat der Lagerraum 43 eine halbkreisförmige Lagernut 44, in die ein entsprechend angepaßter bogenförmiger Abschnitt einer Sperrklinke 45 einfaßt. Die Sperrklinke 45 hat einen Klinkenabschnitt 46, der - wie die gesamte Sperrklinke 45 - so breit ist, daß er in beide Verzahnungshälften 42 unter Überbrückung der Nut 23 einfaßt. Nach oben hin wird die Sperrklinke 45 durch die dort vorhandene Öffnung des Lagerraums 43 waagerecht herausgeführt und ist dort nochmals um 180̸° umgebogen, so daß ein Klinkenhebel 47 entsteht. Der Klinkenhebel 47 wird beidseits begrenzt von Seitenwandungen 48, 49, die in gleicher Weise wie die Seitenwandungen 39, 40̸ für den Blockierhebel 27 vor unabsichtlicher Betätigung des Klinkenhebels 47 schützen sollen.

In dem Lagerraum 43, und zwar gegenüberliegend der Lagernut 44, ist eine V-förmige Blattfeder 50̸ gehalten, deren einer Schenkel unter auf die Verzahnungshälften 42 wirkender Vorspannung an der Sperrklinke 45 anliegt. Auf diese Weise ist gesichert, daß die Sperrklinke 45 nicht von selbst aus der Eingriffsposition herausschwenkt.

Sperrklinke 45 und die Zähne der Verzahnungshälften 42 sind so aufeinander abgestimmt, daß beide ratschenförmig wirken, d. h. beim Ausfahren des inneren Teleskopteils 3 aus dem äußeren Teleskopteil 2 ratscht der Klinkenabschnitt 46 über die Zähne der Verzahnungshälften 42 hinweg. Dagegen wirkt der Klinkenabschnitt 46 in umgekehrter Richtung sperrend, wenn auf das innere Teleskopteil 3 eine Kraft in Einfahrrichtung wirkt, da es sich dann mit den Verzahnungshälften 42 verzahnt.

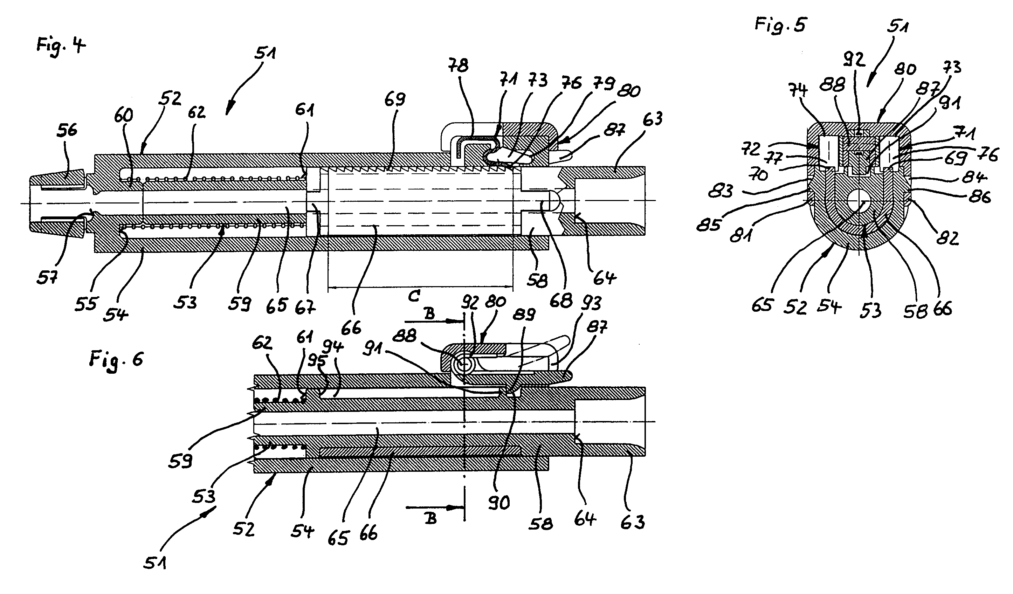

Die in den Figuren 4 bis 6 dargestellte Nachstelleinrichtung 51 weist ebenfalls als Hauptelemente ein äußeres Teleskopteil 52 und ein inneres Teleskopteil 53 auf. Das äußere Teleskopteil 52 hat einen Mantel 54, der im linksseitigen Abschnitt zylindrisch-geschlossen und im rechtsseitigen Abschnitt - wie insbesondere aus Figur 5 erkennbar - U-förmig ausgebildet ist. Linksseitig endet das äußere Teleskopteil 52 in einer Ringanschlagwandung 55. Außenseitig ist am Mantel 54 ein Hülsenabschnitt 56 angeformt, der innenseitig eine ringförmige Verengung 57 aufweist. Am gegenüberliegenden Ende ist das äußere Teleskopteil 52 offen ausgebildet.

Das innere Teleskopteil 53 hat einen vorderen Mantelabschnitt 58 und einen hinteren Mantelabschnitt 59. Letzterer Mantelabschnitt 59 ist hülsenförmig gestaltet und hat kreisförmigen Querschnitt. In der gezeigten Stellung liegt er an einem Hülsenvorsprung 60̸ an, der von der Ringanschlagwandung 55 des äußeren Teleskopteils 52 nach innen ragt. Der hintere Mantelabschnitt 59 wird nach vorn hin durch eine Ringanschlagwandung 61 begrenzt. An den beiden gegenüberliegenden Ringanschlagwänden 55, 61 stützen sich die Enden einer als Druckfeder wirkenden Schraubenfeder 62 ab. Sie ist bestrebt, das innere Teleskopteil 53 aus dem äußeren Teleskopteil 52 zu stoßen.

Der vordere Mantelabschnitt 58 läuft zum freien, nach außen ragenden Ende in einen Hülsenabschnitt 63 aus, der innenseitig eine Abstützfläche 64 ausbildet. Durch das gesamte innere Teleskopteil 53 geht ein Durchlaßkanalabschnitt 65, der sich nach hinten hin fortsetzt und in dem Hülsenabschnitt 56 ausläuft.

Der vordere Mantelabschnitt 58 hat im Kernbereich eine U-förmige Kontur, wie insbesondere aus Figur 5 zu ersehen ist. In diesem Bereich ist er von einer gleichfalls U-förmigen Metallschale 66 umgeben, die über Laschen 67, 68 vorder- und hinterseitig an dem vorderen Mantelabschnitt 58 gehalten wird. An den oberen Stirnseiten weist die Metalischale 66 jeweils eine sägezahnartige Verzahnung 69, 70̸ auf, wobei die Zähne der Verzahnungen 69, 70̸ nach hinten gerichtet sind.

Gegenüber den Verzahnungen 69, 70̸ befindet sich jeweils eine Sperrklinke 71, 72, die identisch sind und deren Formgebung sich aus Figur 4 ersehen läßt. Dazu ist in dem äußeren Teleskopteil 52 jeweils ein Lagerraum 73, 74 vorgesehen, die jeweils eine halbkreisförmige Lagernut 75 aufweisen, in die ein entsprechend angepaßter bogenförmiger Abschnitt der Sperrklinke 71, 72 einfaßt. Die Sperrklinken 71, 72 weisen Klinkenabschnitte 76, 77 auf, die jeweils in eine Zahnlücke der Verzahnungen 69, 70̸ einfassen. Nach oben hin werden die Sperrklinken 71, 72 durch die dort vorhandenen Öffnungen der Lagerräume 73, 74 herausgeführt und bilden dort Klinkenhebel 78. In den Lagerräumen 73, 74, und zwar gegenüberliegend der jeweils zugehörigen Lagernut 45, ist eine V-förmige Blattfeder 79 gehalten, deren einer Schenkel unter auf die Verzahnungen 69, 70̸ jeweils an dem zugehörigen Klinkenabschnitt 76, 77 anliegt. Auf diese Weise ist gesichert, daß die Sperrklinken 71, 72 nicht von selbst aus der Eingriffsposition herausschwenken.

Im übrigen sind die Sperrklinken 71, 72 ebenso wie bei dem Ausführungsbeispiel gemäß den Figuren 1 bis 3 und die Zähne der Verzahnungen 69, 70̸ so geformt, das sie jeweils ratschenförmig wirken, d. h. beim Ausfahren des inneren Teleskopteils 53 aus dem äußeren Teleskopteil 52 ratschen die Klinkenabschnitte 76, 77 über die Zähne der Verzahnungen 69, 70̸ hinweg. Dagegen wirken die Klinkenabschnitte 76, 77 in umgekehrter Richtung, wenn auf das innere Teleskopteil 53 eine Kraft ein Einfahrrichtung wirkt, sperrend, da dann eine Verzahnung eintritt. Diese Sperrung kann durch Druck auf die Klinkenhebel 78 von oben bei Bedarf aufgehoben werden.

Im vorderen Bereich ist auf das äußere Teleskopteil 52 ein Dachaufsatz 80̸ aufgebracht. Er hat nach unten gehende Befestigungsschenkel 81, 82, die Öffnungen 83, 84 aufweisen und die beiden Seiten des Mantels 54 des äußeren Teleskopteils 52 einfassen. Die unterhalb der Öffnungen 83, 84 liegenden Teile der Befestigungsschenkel 81, 82 unterfassen hakenförmige Vorsprünge 85, 86, die ein selbsttätiges Lösen des Dachaufsatzes 80̸ verhindern. Die Formgebung der Vorsprünge 85, 86 ist so beschaffen, daß beim Aufsitzen des Dachaufsatzes 80̸ die Befestigungsschenkel 81, 82 zunächst nach außen gebogen werden, bis die unteren Teile der Befestigungsschenkel 81, 82 über die Vorsprünge 85, 86 gerutscht sind und die Vorsprünge 85, 86 in die Öffnungen 83, 84 einfassen.

Im Dachaufsatz 80̸ ist - wie insbesondere Figur 6 zeigt - ein Blockierhebel 87 auf einer Schwenkachse 88 gelagert. Er weist eine Blockierklinke 89 auf, die in eine Blockierausnehmung 90̸ an der Oberseite des inneren Teleskopteils 53 einfaßt. Diese wird begrenzt durch einen Blockiersteg 91, der aufgrund der Wirkung der Schraubenfeder 62 gegen die Blockierklinke 89 gepreßt wird. Dabei ist der Blockierhebel 87 aufgrund einer weiteren Schraubenfeder 92, die um die Schwenkachse 88 gewickelt ist, in Eingriffsrichtung vorgespannt, so daß ein selbsttätiges Lösen nicht möglich ist.

Soll das innere Teleskopteil 53 aus dem äußeren Teleskopteil 52 ausfahren, wird der Blockierhebel 87 nach oben in die strichpunktierte Stellung bewegt. Hierzu weist der Dachaufsatz 80̸ einen Ausschnitt 93 auf. Hinter dem Blockiersteg 91 befindet sich eine Längsnut 94, die sich zwischen den Verzahnungen 69, 70̸ erstreckt und etwa die gleiche Länge hat. Sie endet in einem Nutanschlag 95, der als Begrenzung für die Austeleskopierbewegung des inneren Teleskopteils 53 dient und an dem die Blockierklinke 89 in der äußersten Stellung anfährt. Auf diese Weise ist gesichert, daß das innere Teleskopteil 53 bei kurzem Anheben des Blockierhebeis 87 nicht vollständig aus dem äußeren Teleskopteil 52 herausfährt. Durch erneutes Anheben des Blockierhebels 87 ist dies jedoch bei Bedarf möglich.

In Figur 7 ist ein Betätigungszug 10̸1 verkürzt dargestellt. Der Betätigungszug 10̸1 hat einen biegsamen, schlauchförmigen Betätigungsmantel 10̸2, durch den ein Betätigungsdraht 10̸3 hindurchgeht. An dem rechtsseitigen Endbeschlag 10̸4 ragt der Betätigungsdraht 10̸3 heraus und endet in einem Anschlußstück 10̸5. Über dieses Anschlußstück 10̸5 kann der Betätigungsdraht 10̸3 mit einem Betätigungsorgan, beispielsweise einem Handbremshebel, verbunden werden. Kurz hinter dem Endbeschlag 10̸4 ist der Betätigungsmantel 10̸2 von einer Gummimanschette 10̸6 umgeben, mit der der Betätigungsmantel 10̸2 in eine Halterung eingesetzt werden kann.

Das linksseitige Ende des Betätigungsmantels 10̸2 läuft in den Hülsenabschnitt 63 der für diesen Betätigungszug 10̸1 verwendeten Nachstelleinrichtung 51 und liegt mit seiner Stirnseite an der Abstützfläche 64 an. Der Betätigungsdraht 10̸3 durchläuft die Nachstelleinrichtung 51 und tritt an dem Hülsenabschnitt 56 wieder aus der Nachstelleinrichtung 51 aus. Das freie Ende des Betätigungsdrahts 10̸3 ist mit einem Anschlußstück 10̸7 beispielsweise für das Einhängen in eine passende Ausnehmung an der Feststellbremse versehen.

Bei der Montage wird der Betätigungszug 10̸1 einerseits an der Gummimanschette 10̸6 und andererseits - was hier nicht näher dargestellt ist - über das äußere Teleskopteil 52 festgelegt. Dabei befindet sich das innere Teleskopteil 53 der Nachstelleinrichtung 51 noch voll in dem äußeren Teleskopteil 52 eingeschoben. Nach erfolgter Montage wird der Blockierhebel 87 kurz angehoben, so daß die Schraubenfeder 62 in der Weise wirksam wird, daß sie bestrebt ist, das innere Teleskopteil 53 in Ausfahrrichtung zu bewegen. Auf diese Weise wird auf den Betätigungsmantel 10̸2 ein entsprechender Druck ausgeübt mit der Folge, daß die wirksame Länge des Betätigungsmantels 10̸2 größer wird, bis in dem Betätigungszug 10̸1 keine Lose mehr vorhanden ist. Bei Betätigung des Betätigungszugs 10̸1 behält der Betätigungsmanel 10̸2 seine wirksame Länge, da ein Zurückfahren des inneren Teleskopteils 53 in das äußere Teleskopteil 52 durch die Sperrklinken 71, 72 verhindert wird. Sobald in dem Betätigungszug 10̸1 wieder eine Lose auftritt, beispielsweise weil die Feststellbremse einem Verschleiß unterliegt, drückt die Schraubenfeder 62 das innere Teleskopteil 53 wieder ein Stück aus dem äußeren Teleskopteil 52 unter Vergrößerung der wirksamen Länge des Betätigungsmantels 10̸2 heraus, so daß innerhalb des Nachstellbereichs - in Figur 4 mit C bezeichnet - eine stetige und automatische Anpassung erfolgt.

In Figur 8 ist eine Modifikation des Betätigungszugs 10̸1 gemäß Figur 7 dargestellt, wobei für dieselben Teile dieselben Bezugsziffern verwendet werden. Der einzige Unterschied besteht darin, daß die Nachstelleinrichtung 51 nicht am Ende des Betätigungsmantels 10̸2 anschließt, sondern in den Betätigungsmantel 10̸2 derart aufgenommen ist, daß ein erster Mantelabschnitt 10̸8 und ein zweiter Mantelabschnitt 10̸9 entstehen, wobei der zweite Mantelabschnitt 10̸9 linksseitig an der Nachstelleinrichtung 51 anschließt und in einem Endbeschlag 110̸ ausläuft.

Für diese Anordnung ist die Nachstelleinrichtung 51 nur unwesentlich modifiziert. Der linksseitige Hülsenabschnitt 56' ist so ausgebildet, daß in ihn das dortige Ende des zweiten Mantelabschnitts 10̸9 Aufnahme finden und sich dort an der Abstützfläche 57 axial abstützen kann. Die Wirkung dieser Anordnung ist die gleiche wie bei dem Ausführungsbeispiel gemäß Figur 7. Tritt in dem Betätigungszug 10̸1 eine Lose auf, d. h. entsteht bei der Betätigung des Betätigungsorgans, beispielsweise des Handhebels, zunächst ein Totweg, wird dies sofort durch die Nachstelleinrichtung 51 ausgeglichen, indem das innere Teleskopteil 53 aus dem äußeren Teleskopteil 52 entsprechend ausfährt.

An oder in den Betätigungszug 10̸1 kann in analoger Weise die Nachstelleinrichtung 1 gemäß den Figuren 1 bis 3 an bzw. eingebaut werden.

## Patentansprüche

1. Nachstelleinrichtung für biegsame Betätigungszüge, welche eine Betätigungsseele und einen diese bis auf Endbereiche umgebenden Betätigungsmantel aufweisen, wobei die Nachstelleinrichtung eine durch eine Spreizfeder beaufschlagte Spreizeinrichtung aufweist, gekennzeichnet durch folgende Merkmale:
a) die Spreizeinrichtung weist ein äußeres Teleskopteil (2, 52) und ein darin axial beweglich geführtes inneres Teleskopteil (3, 53) auf;
b) durch beide Teleskopteile (2, 3; 52, 53) geht ein sich in Teleskopierrichtung erstreckender Durchgangskanal für die Betätigungsseele (10̸3);
c) die Spreizfeder (14, 62) ist zwischen den beiden Teleskopteilen (2, 3; 52, 53) angeordnet und beaufschlagt sie in austelekopierender Richtung;
d) wenigstens eines der Teleskopteile (2, 3; 52, 53) hat eine Abstützfläche (7, 13; 57, 64) für eine Stirnseite des Betätigungsmantels (10̸2, 10̸8, 10̸9);
e) zwischen den Teleskopteilen (2, 3; 52, 53) befindet sich eine sich in Teleskopierrichtung erstreckende Ratschenscheneinrichtung (42, 45; 69, 70̸, 71, 72), die in eintelekospierender Richtung sperrt.

2. Nachstelleinrichtung nach Anspruch 1,
dadurch gekennzeichnet, daß an beiden Teleskopierteilen (2, 3; 52, 53) Abstützflächen (7, 13; 57, 64) für die Stirnseiten von jeweils zwei Teilabschnitten (10̸8, 10̸9) des Betätigungsmantels (10̸2) vorgesehen sind.

3. Nachstelleinrichtung nach Anspruch 2,
dadurch gekennzeichnet, daß die eine Abstützfläche (7; 57) in dem ersten Ende des äußeren Teleskopteils (2; 52) und die andere Abstützfläche (13: 64) an dem dem ersten Ende entfernt liegenden, zweiten Ende des inneren Teleskopteils (3; 53) angeordnet sind.

4. Nachstelleinrichtung nach einem der Ansprüche 1 bis 3,
dadurch gekennzeichnet, daß das innere Teleskopteil (2; 52) rohrförmig ausgebildet ist und einen ersten Anschlag (9; 61) aufweist und daß das äußere Teleskopteil (2, 52) einen zweiten Anschlag (5: 55) aufweist, wobei die Spreizfeder (14; 62) sich als Druckfeder an beiden Anschlägen (9, 61; 5, 55) abstützt.

5. Nachstelleinrichtung nach Anspruch 4,
dadurch gekennzeichnet, daß der erste Anschlag (9; 61) des inneren Teleskopteils (3; 53) und der zweite Anschlag (5, 55) im Bereich des dazu entfernt liegenden Endes des äußeren Teleskopteils (2; 52) angeordnet sind.

6. Nachstelleinrichtung nach Anspruch 4 oder 5,
dadurch gekennzeichnet, daß von dem zweiten Anschlag (5; 55) und/oder von dem ersten Anschlag (9; 61) ein die Spreizfeder (14, 62) durchsetzender Führungszylinder (16) ausgeht.

7. Nachstelleinrichtung nach einem der Ansprüche 4 bis 6,
dadurch gekennzeichnet, daß der Durchgangskanal die Anschläge (9, 61; 5, 55) und ggf. den Führungszylinder (16) durchsetzt und die Spreizfeder (14; 62) koaxial zum Durchgangskanal angeordnet ist.

8. Nachstelleinrichtung nach einem der Ansprüche 1 bis 7,
dadurch gekennzeichnet, daß die Ratscheneinrichtung eine dem Spreizweg entsprechende Verzahnung (42; 69, 70̸) auf der Außenseite des inneren Teleskopteils (3; 53) und eine in dem äußeren Teleskopteil (2; 52) gelagerte Klinkensperre (45; 71, 72) aufweist.

9. Nachstelleinrichtung nach Anspruch 8,
dadurch gekennzeichnet, daß die Klinkensperre (45; 71, 72) derart von außen zugänglich ist, daß sie aus der und in die Eingriffsstellung mit der Verzahnung (42; 69, 70̸) bewegbar ist.

10. Nachstelleinrichtung nach Anspruch 8 oder 9,
dadurch gekennzeichnet, daß die Klinkensperre (45; 71, 72) durch eine Feder (50̸; 79) in Eingriffsstellung mit der Verzahnung (42; 69, 70̸) beaufschlagt ist.

11. Nachstelleinrichtung nach einem der Ansprüche 8 bis 10̸,
dadurch gekennzeichnet, daß die Klinkensperre (45; 71, 72) einen Eingriffsabschnitt (46; 76, 77) und an diesen anschließend einen Bogenabschnitt aufweist, der in einer Lagernut (44, 75) eingepaßt ist.

12. Nachstelleinrichtung nach Anspruch 11,
dadurch gekennzeichnet, daß sich an den ersten Bogenabschnitt ein zweiter Bogenabschnitt anschließt, der in entgegengesetzter Richtung gebogen ist und in einen Betätigungshebel (47; 78) ausläuft.

13. Nachstelleinrichtung nach einem der Ansprüche 8 bis 12,
dadurch gekennzeichnet, daß die Feder als V-förmige Blattfeder (50̸; 79) ausgebildet ist.

14. Nachstelleinrichtung nach einem der Ansprüche 8 bis 13,
dadurch gekennzeichnet, daß die Verzahnung in Verzahnungshälften (42; 69, 70̸) längsgeteilt ist.

15. Nachstelleinrichtung nach Anspruch 14,
dadurch gekennzeichnet, daß jeder Verzahnungshälfte (69, 70̸) eine eigene Klinkensperre (71, 72) zugeordnet ist.

16. Nachstelleinrichtung nach Anspruch 14,
dadurch gekennzeichnet, daß den Verzahnungshälften (42) eine ihren Abstand überbrückende Klinkensperre (45) zugeordnet ist.

17. Nachstelleinrichtung nach einem der Ansprüche 14 bis 16,
dadurch gekennzeichnet, daß die Verzahnungshälften (69, 70̸) an den Oberseiten eines den inneren Teleskopteil (53) umgebenden U-Teils (66) eingeformt sind.

18. Nachstelleinrichtung nach einem der Ansprüche 8 bis 14,
dadurch gekennzeichnet, daß die Verzahnung (42) in das innere Teleskopteil (3) eingeformt ist.

19. Nachstelleinrichtung nach einem der Ansprüche 1 bis 18,
dadurch gekennzeichnet, daß zwischen den Teleskopteilen (2, 3; 52, 53) eine Blockiereinrichtung (24, 25, 26, 27; 89, 90̸, 91) für die lösbare Blockierung des inneren Teleskopteils (3; 53) in einteleskopierter Stellung aufweist.

20. Nachstelleinrichtung nach Anspruch 19,
dadurch gekennzeichnet, daß die Blockiereinrichtung aus in einteleskopierter Stellung im Eingriff stehenden Blockierelementen (24, 26; 89, 91) gebildet ist.

21. Nachstelleinrichtung nach Anspruch 20̸,
dadurch gekennzeichnet, daß das eine Blockierelement als ein Blockieranschlag (24, 91) und das andere Blockierelement als aus der Eingriffsstellung herausbewegbare Blockierklinke (26; 89) ausgebildet sind, welche in dem äußeren Teleskopteil (2; 52) beweglich geführt und von außen zugänglich ist.

22. Nachstelleinrichtung nach Anspruch 21,
dadurch gekennzeichnet, daß die Blockierklinke (26; 89) in Richtung der Blockierstellung federbelastet ist.

23. Nachstelleinrichtung nach einem der Ansprüche 19 bis 22,
dadurch gekennzeichnet, daß mittels der Blockiereinrichtung (24, 25, 26, 27; 87, 89, 90̸, 91) auch eine Blockierung des inneren Teleskopteils (3; 53) in austeleskopierter Stellung bewirkbar ist.

24. Nachstelleinrichtung nach Anspruch 21 oder 22 und 23,
dadurch gekennzeichnet, daß der Blockieranschlag als vorstehender Steg (24; 91) ausgebildet und daß in Teleskopierrichtung einwärts ein weiterer Blockieranschlag (41; 95) vorhanden ist.

25. Nachstelleinrichtung nach einem der Ansprüche 19 bis 24,
dadurch gekennzeichnet, daß die Blockiereinrichtung (24, 25, 26, 27; 87, 89, 90̸, 91) zwischen den Verzahnungshälften (42, 69, 70̸) angeordnet ist.
